# EUROPEAN PATENT SPECIFICATION

(11) **EP 2 006 256 B1**
(45) Date of publication and mention of the grant of the patent: **19.10.2016**
(21) Application number: 07737559.0
(22) Date of filing: 28.02.2007
(51) Int. Cl.: C03B 8/04, F23D 14/22

(54) **QUARTZ GLASS MADE BURNER**
QUARZGLASBRENNER
BRULEUR EN VERRE DE QUARTZ

(30) Priority: 28.02.2006 JP 2006053215
(43) Date of publication of application: 24.12.2008
(73) Proprietor: Shin-Etsu Chemical Company, Ltd., Tokyo 100-0004 (JP)
(72) Inventor: YOSHIDA, Makoto, Kamisu-shi, Ibaraki 314-0102 (JP)
(74) Representative: Pfenning, Meinig & Partner mbB
(86) International application number: PCT/JP2007/053841
(87) International publication number: WO 2007/100019

(56) References cited:
- EP-A2- 1 160 209
- EP-A2- 1 440 946
- JP-A- 1 028 239
- JP-A- 1 067 519
- JP-A- 4 209 725
- JP-A- 6 056 436
- JP-A- 04 209 730
- JP-A- 05 105 471
- JP-A- 07 232 929
- JP-A- 2000 220 810
- JP-A- 2000 220 810
- JP-A- 2000 310 404
- JP-A- 2002 020 132
- JP-A- 2002 228 121
- JP-A- 2002 356 332
- JP-A- 2002 356 332
- JP-A- 2004 036 910
- JP-A- 2004 203 670
- JP-A- 2004 269 334

## Description

### TECHNICAL FIELD

The present invention relates to a quartz glass burner. In particular, the present invention relates to a quartz glass burner suitable for use in flame working, manufacturing of synthetic quartz glass, and the like.

### BACKGROUND ART

A quartz glass burner can achieve high temperatures by feeding a supporting gas from an inner tube nozzle into an outer tube containing a combstible gas to ignite the combustible gas, and is therefore used for various types of flame working. When using a burner in which a plurality of tubules serving as nozzles are inserted throughout the outer tube, in addition to feeding a supporting gas from an inner tube nozzle into an outer tube containing a combustible gas to ignite the combustible gas, a gas containing pieces of glass is fed through any of the tubules to achieve flame hydrolysis, thereby synthesizing the quartz glass microparticles.

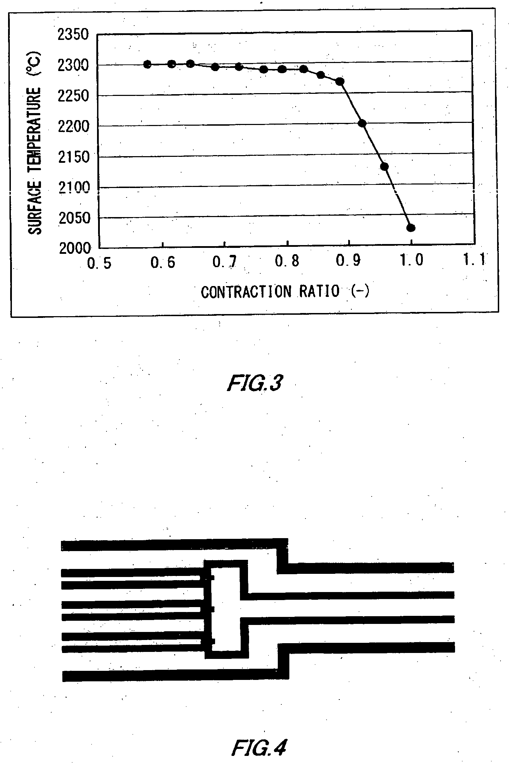

Fig. 4 shows a conventional quartz glass burner. In Fig. 4, the quartz glass burner is provided with a quartz glass outer tube, a tubule branching portion, and a multibranched-tube quartz glass nozzle that is positioned on an inner side of an outer tube and that houses a plurality of tubules formed continuously along the tubule branching portion.

Conventionally, the positioning and number of nozzles feeding the supporting gas in this type of quartz glass burner is considered in an attempt to enhance the firepower during flame working and increase the glass microparticle deposition efficiency.

For example, Japanese Patent Application Publication No. 2003-206154 designates the positioning and number of nozzles in order to enhance the glass microparticle synthesizing efficiency and deposition efficiency. In Japanese Patent Application Publication No. 2003-165737, the diameter and speed of the nozzle is designated. Other quartz glass burners having a multibranched-tube nozzle made up of multiple tubules housed in an outer tube are described in Documents JP 2002 228121 A. EP 1 440 946 A2 and JP 2002 356332 A.

However, optimizing the supply of gas from the nozzles is not the only way to enhance the flame working efficiency and the deposition efficiency. It is also important to optimize the supply of gas from the outer tube. A flow velocity distribution often occurs in the supply of gas from the outer tube due to the large area through which the gas flows, such that the flow velocity at the tip of the burner is uneven. This causes a temperature irregularity, which decreases the flame working efficiency and the deposition efficiency. This temperature irregularity is especially prominent when enlarging the diameter of the outer tube to enlarge the flame.

### DISCLOSURE OF THE INVENTION

### PROBLEMS TO BE SOLVED BY THE INVENTION

It is an object of the present invention to provide a quartz glass burner that enhances the firepower during flame working and increases the glass microparticle deposition efficiency by causing the flow velocity distribution of the gas supplied from the outer tube to be uniform at the tip of the burner.

### MEANS FOR SOLVING THE PROBLEMS

According to the present invention, the above-described problems, are solved by a quartz glass burner according to claim 1. This a quartz glass burner comprises a multibranched-tube quartz glass nozzle made up of multiple tubules housed in a quartz glass outer tube, wherein an inner diameter of the outer tube is contracted such that an inner diameter of a tip of the outer tube is between 0.65 and 0.90 times the inner diameter of a trunk of the outer tube. Particular embodiments of this quartz glass burner are defined in the dependent claims.

It is desirable that the nozzle is structured such that a region from a tubule branching portion to a tip of the nozzle is housed in the outer tube, and that the outer tube housing the tubules has a length that is greater than or equal to 1.5 times the inner diameter of the tip of the outer tube.

The summary clause does not necessarily describe all necessary features of the embodiments of the present invention.

### EFFECT OF THE INVENTION

The quartz glass burner of the present invention decreases the temperature irregularity of the flame working and the deposition body surface by causing the flow velocity distribution of the combustible gas to be uniform at the tip of the outer tube of the burner. Decreasing the temperature irregularity in this way yields favorable results, such as enhancement of the firepower during flame working and enhancement of the glass microparticle deposition efficiency.

### BRIEF DESCRIPTION OF THE DRAWINGS

Fig. 1 is a schematic cross-sectional view taken along a vertical axis of the burner showing an exemplary quartz glass burner of the present invention.
Fig. 2 is a horizontal cross-sectional view showing the quartz glass burner of Fig. 1.
Fig. 3 is a graph showing a relation between contraction ratios of various burners and the maximum surface temperatures of heated quartz glass rods.
Fig. 4 is a horizontal cross-sectional view taken along a vertical axis of the burner showing a conventional quartz glass burner.

### BEST MODE FOR CARRYING OUT THE INVENTION

As follows, an aspect of the present invention is described by embodiments. The following embodiments do not limit the invention that relates to the claims and not all combinations of the features described in the embodiments are necessarily essential to means for solving the problems of the invention.

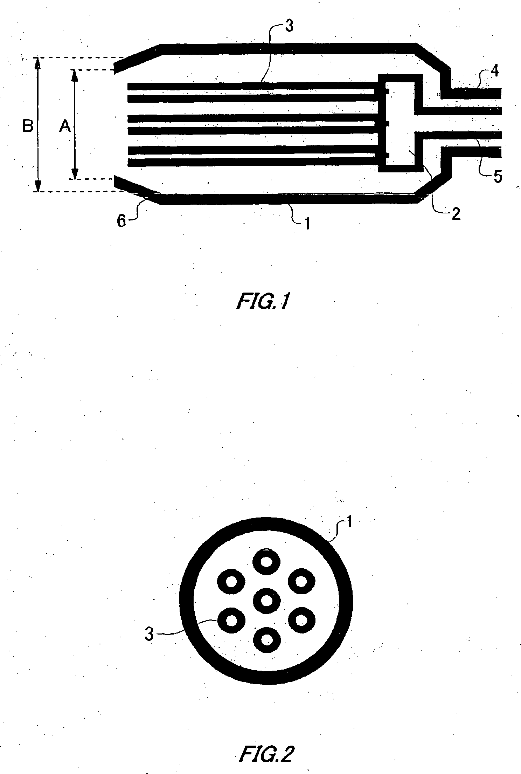

Fig. 1 is a schematic cross-sectional view taken along a vertical axis of the burner showing an exemplary quartz glass burner of the present invention. Fig, 2 is a horizontal cross-sectional view showing the quartz glass burner of Fig. 1.

The quartz glass burner is designed for flame working of synthetic quartz glass. An outer tube 1 of the quartz glass burner houses a multibranched-tube nozzle 3, which is made up of a plurality of tubules mounted on a tubule branching portion 2. A hydrogen gas injector 4 that injects hydrogen gas, serving as the combustible gas, is connected to the outer tube 1. An oxygen gas injector 5 that injects oxygen gas, serving as the supporting gas, is connected to the tubule branching portion 2 on which the plurality of tubules are mounted.

This burner can be used as a burner for synthesizing/depositing glass microparticles by connecting a glass injecting tube, not shown, to any of the tubules.

As shown in Fig. 1, the inner diameter of the outer tube 1 decreases gradually from B to A beginning at the contracted portion 6 at the tip. More specifically, the inner diameter of the outer tube tip is decreased to be between 0.65 and 0.90 times the inner diameter of the trunk of the outer tube.

If this contraction ratio is greater than 0.90, the flow velocity distribution is not uniform at the tip of the outer tube because sufficient pressure is not applied during the ejection of the gas, thereby causing a decrease in the flame working efficiency. If the quartz glass burner is configured to be able to supply glass to any one of the tubules in order to synthesize the glass microparticles, the temperature of the deposition surface decreases, thereby decreasing the adhesive efficiency of the synthesized glass microparticles. If the contraction ratio is less than 0.65, a greater enhancement of flame working efficiency and adhesion efficiency is not achieved since sufficient pressure is already being applied, and also the outer diameter of the outer tube is enlarged and therefore requires a larger space than allowed by the apparatus.

Contracting the tip of the outer tube in this way enables sufficient pressure to be applied at the contracted portion, even if the tip of the outer tube is enlarged. As a result, the flow velocity distribution of the combustible gas is uniform at the tip of the outer tube, thereby decreasing the temperature irregularity of the flame working surface and the deposition surface. The decrease in the temperature irregularity results in enhanced firepower during flame working and enhanced glass microparticle deposition efficiency.

Furthermore, a more uniform flow velocity distribution can be achieved by setting the length of the outer tube to be greater than or equal to 1.5 times the diameter of the tip of the outer tube.

### (First Embodiment Example)

As shown in Fig. 2, one nozzle is disposed in the center of the outer tube for the supporting gas, this nozzle is surrounded with six other nozzles, and the inner diameter of the tip of the outer tube to be 25mmϕ. Quartz glass burners were manufactured with the above specifications and a large variety of contraction ratios by changing the inner diameter of the trunk of the outer tube.

These quartz glass burners having differing contraction ratios were used for flame working of a quartz glass rod having an outer diameter of 60mmϕ. Each of the seven tubules forming the nozzle may be disposed parallel to the central axis of the burner or mounted in the outer tube in a manner to come together at a focal point at a desired position lengthwise on the central axis.

While measuring the surface temperature of a flame working section of each of the burners with a radiation thermometer, the amounts of the gases fed through the outer tube and the nozzle was changed for each burner to achieve the maximum surface temperature. The resulting relation between the contraction ratios and the maximum temperatures is shown in Fig. 3.

As shown in Fig. 3, when the contraction ratio A/B is greater than 0.90, the surface temperature decreases, which also decreases the thermal efficiency. This drop occurs because insufficient contraction results in a large flow velocity distribution of the combustible gas at the tip of the outer tube. On the other hand, when the contraction ratio is less than or equal to 0.65, greater efficiency is not expected since there is already sufficient contraction. Furthermore, when the contraction ratio is 0.65 and the internal diameter of the tip contracted portion is set to 25mmϕ, the inner diameter of the trunk of the outer tube becomes 38mmϕ, which is undesirable as it requires a space greater than the apparatus can allow.

While the embodiments of the present invention have been described, the technical scope of the invention is not limited to the above described embodiments. It is apparent to persons skilled in the art that various alterations and improvements can be added to the above-described embodiments. It is also apparent that the embodiments added with such alterations or improvements can be included in the technical scope of the invention as defined by the scope of the attached claims.

### INDUSTRIAL APPLICABILITY

The quartz glass burner of the present invention is beneficial when used for flame working or manufacturing of synthetic quartz glass, and provides low manufacturing costs and enhanced quality.

## Claims

1. A quartz glass burner comprising a multibranched-tube quartz glass nozzle (3) made up of multiple tubules housed in a quartz glass outer tube (1),
**characterized in that**
an inner diameter of the outer tube (1) is contracted such that an inner diameter (A) of a tip of the outer tube (1) is between 0.65 and 0.90 times the inner diameter (B) of a trunk of the outer tube (1).

2. The quartz glass burner according to Claim 1, wherein
the multibranched-tube nozzle (3) is structured such that a region from a tubule branching portion (2) to a tip of the multibranched-tube nozzle (3) is housed in the outer tube (1).

3. The quartz glass burner according to Claim 2, further comprising a hydrogen gas injector tube (4) connected to the outer tube (1) and an oxygen gas injector tube (5) connected to the tubule branching portion (2).

4. The quartz glass burner according to Claim 3, further comprising a glass injecting tube connected to any of the tubules.

5. The quartz glass burner according to any one of Claims 2 to 4, wherein
the outer tube (1) housing the tubules has a length that is greater than or equal to 1.5 times the inner diameter (A) of the tip of the outer tube (1).

6. The quartz glass burner according to any of the Claims 2 to 5, wherein
said inner diameter of the outer tube is constant for a portion of the outer tube (1), wherein
the outer tube (1) has a contracted portion (6) at the tip and wherein
the inner diameter of the outer tube (1) decreases gradually from the inner diameter (B) of the trunk of the outer tube (1) to the inner diameter (A) of the tip of the outer tube (1) beginning at the contracted portion (6).

7. The quartz glass burner according to any one of Claims 2 to 6, wherein
the multibranched-tube nozzle (3) comprise one nozzle which is disposed in the center of the outer tube (1), this nozzle being surrounded with plural other nozzles.

8. The quartz glass burner according to Claim 7, wherein
the inner diameter of the tip (A) of the outer tube (1) is 25 mm.

9. The quartz glass burner according to any one of Claims 7 or 8, wherein
the plural other nozzles are six nozzles and wherein
each of the seven tubules forming the multibranched-tube nozzle (3) is disposed parallel to a central axis of the burner.

10. The quartz glass burner according to any one of Claims 2 to 9, wherein
the outer tube (1) is tapered at the opposite side from said tip of the outer tube (1).

## Patentansprüche

1. Quarzglasbrenner, aufweisend eine Quarzglasdüse (3) aus einem mehrarmigen Rohr, die aus mehreren Röhrchen besteht, die in einem äußeren Quarzglasrohr (1) aufgenommen sind,
**dadurch gekennzeichnet, dass**
ein innerer Durchmesser des äußeren Rohrs (1) derart zusammengezogen ist, dass ein innerer Durchmesser (A) einer Spitze des äußeren Rohrs (1) zwischen dem 0,65- und 0,90-fachen des inneren Durchmessers (B) des Körpers des äußeren Rohrs (1) liegt.

2. Quarzglasbrenner nach Anspruch 1, bei dem
die Düse (3) aus dem mehrarmigen Rohr so strukturiert ist, dass ein Bereich von einem Röhrchenverzweigungsteil (2) bis zu einer Spitze der Düse (3) aus dem mehrarmigen Rohr in dem äußeren Rohr (1) aufgenommen ist.

3. Quarzglasbrenner nach Anspruch 2, weiterhin aufweisend ein Wasserstoffgas-Injektionsrohr (4), das mit dem äußeren Rohr (1) verbunden ist, und ein Sauerstoffgas-Injektionsrohr (5), das mit dem Röhrchenverzweigungsteil (2) verbunden ist.

4. Quarzglasbrenner nach Anspruch 1, weiterhin aufweisend ein Glasinjektionsrohr, das mit irgendeinem der Röhrchen verbunden ist.

5. Quarzglasbrenner nach einem der Ansprüche 2 bis 4, bei dem das äußere Rohr (1), das die Röhrchen aufnimmt, eine Länge hat, die größer als das oder gleich de, 1,5-fache(n) des inneren Durchmessers (A) der Spitze des äußeren Rohrs (1) ist.

6. Quarzglasbrenner nach einem der Ansprüche 2 bis 5, bei dem der innere Durchmesser des äußeren Rohrs über einen Bereich des äußeren Rohrs (1) konstant ist, wobei
das äußere Rohr (1) einen zusammengezogenen Bereich (6) an der Spitze hat, und wobei
der innere Durchmesser des äußeren Rohrs (1) allmählich von dem inneren Durchmesser (B) des Körpers des äußeren Rohrs (1) zu dem inneren Durchmesser (A) der Spitze des äußeren Rohrs (1) beginnend an dem zusammengezogenen Bereich (6) abnimmt.

7. Quarzglasbrenner nach einem der Ansprüche 2 bis 6, bei dem die Düse (3) aus dem mehrarmigen Rohr eine Düse aufweist, die sich in der Mitte des äußeren Rohrs (1) befindet, wobei diese Düse von mehreren anderen Düsen umgeben ist.

8. Quarzglasbrenner nach Anspruch 7, bei dem
der innere Durchmesser der Spitze (A) des äußeren Rohrs (1) 25 mm beträgt.

9. Quarzglasbrenner nach einem der Ansprüche 7 oder 8, bei dem die mehreren anderen Düsen sechs Düsen sind, und bei dem
jedes der sieben Röhrchen, die die Düse (3) aus dem mehrarmigen Rohr bilden, parallel zu einer mittleren Achse des Brenners angeordnet ist.

10. Quarzglasbrenner nach einem der Ansprüche 2 bis 9, bei dem das äußere Rohr (1) auf der der Spitze des äußeren Rohrs (1) entgegengesetzten Seite konisch ist.

## Revendications

1. Brûleur en verre de quartz comprenant un éjecteur en verre de quartz sous forme de tube multi-branche (3) constitué par de multiples tubules logés dans un tube externe en verre de quartz (1), **caractérisé en ce que** :
un diamètre interne du tube externe (1) est contracté de telle sorte qu'un diamètre interne (A) d'une pointe du tube externe (1) soit égal entre 0,65 et 0,90 fois le diamètre interne (B) d'un tronçon du tube externe (1).

2. Brûleur en verre de quartz selon la revendication 1, dans lequel:
l'éjecteur sous forme de tube multi-branche (3) est structuré de telle sorte qu'une région depuis une partie de branchement de tubule (2) jusqu'à une pointe de l'éjecteur sous forme de tube multi-branche (3) soit logée dans le tube externe (1).

3. Brûleur en verre de quartz selon la revendication 2, comprenant en outre un tube injecteur de gaz hydrogène (4) connecté au tube externe (1) et un tube injecteur de gaz oxygène (5) connecté à la partie de branchement de tubule (2).

4. Brûleur en verre de quartz selon la revendication 3, comprenant en outre un tube d'injection en verre connecté à l'un quelconque des tubules.

5. Brûleur en verre de quartz selon l'une quelconque des revendications 2 à 4, dans lequel :
le tube externe (1) qui loge les tubules présente une longueur qui est supérieure ou égale à 1,5 fois le diamètre interne (A) de la pointe du tube externe (1).

6. Brûleur en verre de quartz selon l'une quelconque des revendications 2 à 5, dans lequel :
ledit diamètre interne du tube externe est constant sur une partie du tube externe (1) ; dans lequel :
le tube externe (1) comporte une partie contractée (6) au niveau de la pointe ; et dans lequel :
le diamètre interne du tube externe (1) diminue progressivement depuis le diamètre interne (B) du tronçon du tube externe (1) jusqu'au diamètre interne (A) de la pointe du tube externe (1) commençant au niveau de la partie contractée (6).

7. Brûleur en verre de quartz selon l'une quelconque des revendications 2 à 6, dans lequel :
l'éjecteur en forme de tube multi-branche (3) comprend un éjecteur qui est disposé au centre du tube externe (1), cet éjecteur étant entouré par plusieurs autres éjecteurs.

8. Brûleur en verre de quartz selon la revendication 7, dans lequel :
le diamètre interne de la pointe (A) du tube externe (1) est de 25 mm.

9. Brûleur en verre de quartz selon l'une quelconque des revendications 7 ou 8, dans lequel :
les plusieurs autres éjecteurs sont au nombre de six éjecteurs ; et dans lequel :
chacun des sept tubules formant l'éjecteur sous forme de tube multi-branche (3) est disposé parallèlement à un axe central du brûleur.

10. Brûleur en verre de quartz selon l'une quelconque des revendications 2 à 9, dans lequel :
le tube externe (1) est à flancs inclinés au niveau du côté opposé à ladite pointe du tube externe (1).
